# EUROPÄISCHE PATENTSCHRIFT

(11) **EP 3 389 939 B1**
(45) Veröffentlichungstag und Bekanntmachung des Hinweises auf die Patenterteilung: **31.08.2022**
(21) Anmeldenummer: 16777664.0
(22) Anmeldetag: 04.10.2016
(51) Int. Cl.: B24B 23/02, B25F 5/02, B25F 5/00

(54) **FILTERTRÄGER FÜR EINE HANDWERKZEUGMASCHINE**
FILTER SUPPORT FOR A HANDHELD POWER TOOL
PORTE-FILTRE POUR MACHINE-OUTIL PORTATIVE

(30) Priorität: 17.12.2015 DE 102015225802; 25.07.2016 DE 102016213617
(43) Veröffentlichungstag der Anmeldung: 24.10.2018
(73) Patentinhaber: Robert Bosch GmbH, 70442 Stuttgart (DE)
(72) Erfinder: ESENWEIN, Florian, 70771 Leinfelden-Echterdingen (DE); STIERLE, Peter, 72124 Pliezhausen (DE); LUTZ, Manfred, 70794 Filderstadt (DE); SCHOMISCH, Thomas, 70794 Filderstadt (DE)
(86) Internationale Anmeldenummer: PCT/EP2016/073586
(87) Internationale Veröffentlichungsnummer: WO 2017/102125

(56) Entgegenhaltungen:
- EP-A1- 2 944 423
- WO-A1-2015/066759
- CH-A- 336 121
- JP-A- S5 849 066
- JP-A- 2002 283 255
- JP-A- 2010 036 260
- US-A1- 2009 095 249

## Beschreibung

### Stand der Technik

Die Erfindung betrifft einen Filterträger für eine Handwerkzeugmaschine gemäß dem Oberbegriff des Anspruchs 1.

In DE 10 2008 009 277 A1 ist ein Elektrohandwerkzeuggerät mit einem die elektromotorischen Antriebskomponenten aufnehmenden Gehäusekörper, in welchem auch Lufteintrittsöffnungen für einen die elektromotorischen Antriebskomponenten beaufschlagenden Kühlluftstrom vorgesehen sind. Weiterhin ist das Gerät so ausgebildet, dass im Bereich der Lufteintrittsöffnungen ein Filtermittel vorgesehen ist, mittels dessen insbesondere Magnetisierungsstaub von den elektromotorischen Antriebskomponenten ferngehalten werden kann. Andere Beispiele sind aus der JP2002283255A, CH336121A oder EP2944423A1 bekannt. Der Oberbegriff des Anspruches 1 ist aus der WO2015066759A1 bekannt.

Offenbarung der Erfindung Aus dem Stand der Technik ergibt sich die Aufgabe eine Handwerkzeugmaschine mit einem Filterträger bereitzustellen, wobei der Filterträger einfach von der Handwerkzeugmaschine lösbar ist.

Die Erfindung gemäß Anspruch 1 betrifft einen Filterträger für ein Handwerkzeugmaschine mit zumindest einem Filterträgerelement, wobei das Filterträgerelement zumindest eine Aufnahmeöffnung aufweist, die dazu ausgebildet ist, zumindest ein Filterelement aufzunehmen. Der Filterträger kann lösbar befestigbar an der Handwerkzeugmaschine ausgebildet sein. Die Handwerkzeugmaschine kann beispielhaft als ein Winkelschleifer, eine Bohrmaschine, ein Bohrhammer, ein Exzenterschleifer, eine Fräse, eine Schleifmaschine etc. ausgebildet sein. Die Handwerkzeugmaschine weist ein Gehäuse auf. In dem Gehäuse kann ein Motor, insbesondere ein Elektromotor, aufgenommen sein. Des Weiteren kann das Gehäuse einer Handwerkzeugmaschine zumindest ein Lufteingangsöffnung aufweisen, die dazu vorgesehen ist, einen Zugang für Kühlluft an die inneren Komponenten der Handwerkzeugmaschine zu realisieren. Das Filterelement des Filterträgers ist derart in der Aufnahmeöffnung des Filterträgers angeordnet, dass durch das Filterelement ein Eindringen von Werkstoffpartikel und Staub in das Gehäuse der Handwerkzeugmaschine verhindert wird. Das Filterelement des Filterträgers kann aus einem im Wesentlichen staubdichten Material ausgebildet sein. Das Filterelement kann insbesondere aus einem Kunststoff- oder Metallgewebe beziehungsweise Kunststoff- oder Metallnetz sowie einem Vlies ausgebildet sein. Das Filterelement kann insbesondere durch Einspritzen, Einkleben, Einklipsen, Einlegen, Einnähen, Heißprägen oder Ultraschallschweißung mit dem Filterträgerelement des Filterträgers verbunden sein. Das Filterträgerelement des Filterträgers kann vorteilhaft aus hart elastischen Material, insbesondere einem form- oder biegestabilen Kunststoff, ausgebildet sein. Alternativ kann der Filterträger auch aus einem weich elastischen Material ausgebildet sein. Das Filterträgerelement kann, insbesondere abhängig von der Geometrie des Handwerkzeugs, einstückig oder mehrstückig ausgebildet sein.

Des Weiteren umfasst der erfindungsgemäße Filterträger zumindest ein erstes Befestigungselement und zumindest ein zweites Befestigungselement zur lösbaren formschlüssigen und/oder kraftschlüssigen Befestigung des Filterträgers an eine Handwerkzeugmaschine. Das erste Befestigungselement und das zweite Befestigungselement des Filterträgers sind derart an gegenüberliegenden Endbereichen des Filterträgers angeordnet, dass das erste Befestigungselement verbindbar mit dem zweiten Befestigungselement ist. Unter Endbereichen des Filterträgers sollen insbesondere die Seitenkanten des Filterträgers oder die unmittelbare Umgebung der Seitenkanten des Filterträgers verstanden werden. Insbesondere sind das erste und das zweite Befestigungselement des Filterträgers im unbefestigten Zustand an gegenüberliegenden Endbereichen oder Seitenkanten angeordnet.

Im Folgenden wird der Filterträger in zwei Zuständen, einem an einer Handwerkzeugmaschine befestigten Zustand und einem unbefestigten Zustand beschrieben. Insbesondere sind das erste und das zweite Befestigungselement im befestigten Zustand miteinander lösbar verbunden und im unbefestigten Zustand sind das erste und das zweite Befestigungselement des Filterträgers voneinander beabstandet. Die Verbindung zwischen dem ersten Befestigungselement des Filterträgers mit dem zweiten Befestigungselement des Filterträgers kann insbesondere formschlüssig und/oder kraftschlüssig erfolgen, insbesondere über eine Rastverbindung. Die der Handwerkzeugmaschine zugewandte Innenkontur des Filterträgers kann vorteilhaft der Außenkontur des Gehäuses der Handwerkzeugmaschine eng angepasst sein. Dadurch entsteht im befestigten Zustand des Filterträgers ein Formschluss, insbesondere ein Form- und Kraftschluss, des Filterträgers mit der Handwerkzeugmaschine. Das erste und das zweite Befestigungselement, insbesondere ausgebildet als Rastelemente, des Filterträgers können an dem Filterträger angespritzt und damit mit dem Filterträgerelement einstückig ausgebildet sein.

Der Filterträger kann dazu ausgebildet sein, im befestigten Zustand zumindest teilweise die Umfangsfläche einer Handwerkzeugmaschine in Längsrichtung, und zumindest teilweise, insbesondere vollständig, die Umfangsfläche der Handwerkzeugmaschine in Umfangsrichtung zu umschließen. Unter zumindest teilweise die Umfangsfläche der Handwerkzeugmaschine in Umfangsrichtung zu umschließen soll insbesondere ein Umschließen eines Winkelbereichs von 180° bis 360°, vorteilhaft 270° bis 360° verstanden werden. Unter insbesondere vollständig soll ein Winkelbereich von 360° verstanden werden. Der Winkelbereich den der Filterträger umschließt soll dabei nicht die Überlappung des ersten und des zweiten Befestigungselements beinhalten. Unter Umfangsfläche einer Handwerkzeugmaschine soll hierbei insbesondere die Umfangsfläche eines Gehäuses einer Handwerkzeugmaschine verstanden werden. Die Längsrichtung der Handwerkzeugmaschine verläuft im Wesentlichen koaxial zum Antriebsstrang der Handwerkzeugmaschine. Im befestigten Zustand entspricht die Längsrichtung des Filterträgers im Wesentlichen der Längsausrichtung der Handwerkzeugmaschine. Die Längsrichtung des Filterträgers im befestigten Zustand entspricht der Längsrichtung des Filterträgers im unbefestigten Zustand. Im befestigen Zustand des Filterträgers können die gegenüberliegenden Endbereiche, an denen das erste und das zweite Befestigungselement angeordnet sind, vorteilhaft einander beaufschlagen.

Das erste Befestigungselement und das zweite Befestigungselement des Filterträgers können im Wesentlichen entlang oder quer zu der Längsrichtung des Filterträgers angeordnet sein. Insbesondere können die gegenüberliegenden Endbereiche des Filterträgers im befestigten Zustand im Wesentlichen entlang oder quer zu der Längsrichtung des Filterträgers angeordnet sein. Umgreift der Filterträger die Umfangsfläche der Handwerkzeugmaschine vollständig in Umfangsrichtung, so können die Befestigungselemente vorteilhaft im Wesentlichen entlang der Längsrichtung der Handwerkzeugmaschine ausgebildet sein. Umgreift der Filterträger die Umfangsfläche der Handwerkzeugmaschine teilweise in Umfangsrichtung, so können die Befestigungselemente vorteilhaft im Wesentlichen quer zu der Längsrichtung der Handwerkzeugmaschine ausgebildet sein. Das erste und/oder das zweite Befestigungselement des Filterträgers können sich entlang des Endbereichs, an welchem sie angeordnet sind, zu mindestens 25%, vorteilhaft mindestens 50%, weiter vorteilhaft zu mindestens 75% oder insbesondere im Wesentlichen komplett, erstrecken. Das erste und/oder das zweite Befestigungselement des Filterträgers kann durchgehend, segmentiert oder partiell ausgebildet sein. Insbesondere korrespondiert die Erstreckung des ersten Befestigungselements des Filterträgers zu der Erstreckung des zweiten Befestigungselements des Filterträgers.

Der Filterträger kann ein weiteres Filterträgerelement aufweisen, das in einem Winkel von 45°-90° zu der Längsausrichtung der Handwerkzeugmaschine angeordnet ist. Insbesondere kann der Winkel auch 75°-90° betragen und vorteilhaft ist das weitere Filterträgerelement im Wesentlichen senkrecht zu der der Längsausrichtung der Handwerkzeugmaschine angeordnet. Insbesondere deckt das weitere Filterelement das rückwärtige Ende einer Handwerkzeugmaschine ab, an welchem beispielsweise eine Tülle zur Aufnahme eines Netzkabel vorgesehen sein kann. Dies hat den Vorteil, dass neben den Lufteingangsöffnungen der Handwerkzeugmaschine entlang der Umfangsfläche der Handwerkzeugmaschine auch Lufteingangsöffnung an dem rückseitigen Ende der Handwerkzeugmaschine mit den Filterelementen des Filterträgers abdeckbar ausgebildet sind. Das zusätzliche Filterträgerelement kann insbesondere einstückig mit einem Filterträgerelement, welches an der Umfangsfläche angeordnet ist, ausgebildet sein. Es ist allerdings auch denkbar, dass das weitere Filterträgerelement eine andere Fläche des Gehäuses der Handwerkzeugmaschine abdeckt.

Das zumindest eine Filterträgerelement kann aus einem hart elastischen Material ausgebildet sein. Insbesondere ist das Filterträgerelement aus einem form- und/oder biegestabilen Material ausgebildet.

Der Filterträger kann zwei Filterträgerelemente umfassen, die als Filterträgerhalbschalen ausgebildet sind.

Der Filterträger kann ein Gelenk, insbesondere ein Scharniergelenk oder ein Drehgelenk, aufweisen, das zwischen den zwei Filterträgerhalbschalen angeordnet ist. Insbesondere sind die beiden Filterträgerhalbschalen über das Gelenk miteinander verbunden. Das Gelenk des Filterträgers kann im befestigten Zustand des Filterträgers beispielsweise gegenüber dem ersten und dem zweiten Befestigungselement des Filterträgers angeordnet sein. Das Gelenk des Filterträgers stellt eine Drehachse dar. Das Gelenk des Filterträgers ist vorteilhaft dazu vorgesehen, eine Öffnungswinkel zwischen den zwei Gehäusehalbschalen des Filterträgers in einem Bereich von 0°, was dem Öffnungswinkel im befestigten Zustand des Filterträgers entspricht, und einem maximalen Öffnungswinkel einzustellen. Ein geeigneter maximaler Öffnungswinkel kann in einem Bereich von 10° bis 270° liegen. Das Gelenk des Filterträgers kann vorteilhaft dergestalt ausgebildet sein, dass der maximale Öffnungswinkel im unbefestigten Zustand des Filterträgers zumindest 180° beträgt. Beträgt der Öffnungswinkel beispielweise 0°, so kann das erste und das zweite Befestigungselement des Filterträgers miteinander verbunden werden. Es ist auch denkbar, dass eine Verbindung des ersten mit dem zweiten Befestigungselement des Filterträgers bereits ab einem Öffnungswinkel von 15° realisiert werden kann. Die Filterträgerelemente und/oder das weitere Filterträgerelement und/oder das Gelenk können einstückig ausgebildet sein. Durch den großen maximalen Öffnungswinkel ist der der Filterträgeraufsatz einfach und bequem an der Handwerkzeugmaschine befestigbar.

Die beiden Filterträgerhalbschalen können beispielhaft über zwei erste Befestigungselemente und zwei zweite Befestigungselemente lösbar miteinander verbindbar sein. Zur leichten Aufbringung des Filterträgers an die Handwerkzeugmaschine befindet sich das erste paar Befestigungselemente vorteilhaft gegenüber dem zweiten paar Befestigungselemente. Ein paar Befestigungselemente umfasst insbesondere ein erstes und ein zweites Befestigungselement, welche miteinander lösbar verbindbar sind. Somit kann ein zusätzliches paar Befestigungselemente das Gelenk ersetzen.

Das erste Befestigungselement und das zweite Befestigungselement können vorzugsweise als zueinander korrespondierende Rastelemente ausgebildet sein. Eine Rastverbindung kann vorteilhaft zur kraft- und/oder formschlüssigen Verbindung der Befestigungselemente ausgebildet sein.

Die zumindest eine Aufnahmeöffnungen des Filterträgerelements Z weist gemäß Anspruch 1 zumindest ein zusätzliches Sicherungselement auf, das dazu ausgebildet ist, eine Axial- und/oder Drehsicherung des Filterträgers an der Handwerkzeugmaschine herzustellen. Insbesondere kann das Sicherungselement des Filterträgers mit den Lufteingangsöffnungen der Handwerkzeugmaschine lösbar verbindbar ausgebildet sein. Das Sicherungselement des Filterträgers kann vorteilhaft über einen Formschluss mit Strukturelementen der Lufteingangsöffnungen der Handwerkzeugmaschine lösbar verbindbar ausgebildet sein. Unter Strukturelementen der Lufteingangsöffnungen der Handwerkzeugmaschine können insbesondere die Seitenwände der Lufteingangsöffnungen dienen.

Alternativ kann das Filterträgerelement aus einem weich elastischen Material ausgebildet sein. Das Filterträgerelement kann insbesondere derart verformbar ausgebildet sein, dass er sich im befestigten Zustand eng an das Gehäuse der Handwerkzeugmaschine anschmiegt. Insbesondere kann der Filterträger als Band, beziehungsweise als eine die Umfangsfläche einer Handwerkzeugmaschine umschließende Hülle ausgebildet sein. Das Filterträgerelement des Filterträgers kann vorteilhaft aus dem Material des Filterelements ausgebildet sein. Es ist auch denkbar, dass der Filterträger, das zumindest eine Filterelement und das erste sowie das zweite Befestigungselement des Filterträgers einstückig und einstoffig ausgebildet sind. Unter einstoffig soll insbesondere verstanden werden, dass die entsprechenden Bauteile des Filterträgers aus demselben Werkstoff gefertigt sind.

Das erste Befestigungselement und das zweite Befestigungselement des Filterträgers können auf gegenüberliegenden Seitenfläche des Filterträgers angeordnet sein. Der Filterträger weist im Wesentlichen zwei Seitenflächen auf: eine Innenseitenfläche des Filterträgers und eine Außenseitenfläche des Filterträgers, wobei die Innenseitenfläche im befestigten Zustand des Filterträgers das Gehäuse der Handwerkzeugmaschine beaufschlagt. Vorteilhaft kann das erste und das zweite Befestigungselement des Filterträgers an gegenüberliegenden Endbereichen und an gegenüberliegenden Seitenflächen des Filterträgers angeordnet sein.

Das erste Befestigungselement und das zweite Befestigungselement des Filterträgers können zueinander korrespondierende Klettverschlusselemente aufweisen. Der Filterträger, welcher insbesondere als ein Band oder eine Hülle ausgebildet sein kann, kann über eine Klettverbindung verschließbar und an die Handwerkzeugmaschine befestigbar ausgebildet sein. Die Klettverschlusselemente können insbesondere als Hakenelemente oder Schlaufenelemente zur zugfesten und im Wesentlichen staubund/oder luftdichten Befestigung des Filterträgers mit der Handwerkzeugmaschine ausgebildet sein. Das Filterträgerelement, das zumindest eine Filterelement und das erste und das zweite Befestigungselement des Filterträgers sind beispielsweise durch Vernähen oder Verkleben miteinander verbindbar ausgebildet ohne die Elastizität und Flexibilität des Filterträgers zu verlieren. Der Filterträger kann als eine Hülle oder eine Schale ausgebildet sein.

Des Weiteren kann eine Seitenfläche des Filterträgerelements als das erste Befestigungselement ausgebildet sein, und die zweite Seitenfläche des Filterträgerelements als das zweite Befestigungselement ausgebildet sein. Dies ermöglicht das Befestigen des Filterträgers auf unterschiedlich großen Umfangsflächen einer Handwerkzeugmaschine.

Weiterhin ist denkbar, dass der Filterträger ein zusätzliches Formschlusselement aufweist. Das zusätzliche Formschlusselement ist insbesondere zur formschlüssigen Verbindung des Filterträgers mit der Handwerkzeugmaschine vorgesehen. Vorteilhaft ist das zusätzliche Formschlusselement dazu ausgebildet, eine axiale Verschiebung des Filterträgers entlang der Längsachse der Handwerkzeugmaschine und/oder ein Verdrehen des Filterträgers um das Gehäuse der Handwerkzeugmaschine zu verhindern.

Des Weiteren kann der Filterträger vorteilhaft ein zweites Filterträgerelement aufweisen, wobei das zumindest eine zusätzliche Formschlusselement an dem zweiten Filterträgerelement angeordnet ist. Das zweite Filterträgerelement ist insbesondere aus einem formstabilen Kunststoff ausgebildet. Besonders vorteilhaft ist das weich elastische Filterträgerelement kraftschlüssig mit der Handwerkzeugmaschine und das formstabile zweite Filterträgerelement formschlüssig mit der Handwerkzeugmaschine verbunden.

Das zweite Filterträgerelement kann mit dem ersten Filterträgerelement über einen Steg verbunden sein wodurch vorteilhaft die beiden Filterträgerelemente verliersicher miteinander verbunden sind.

Die Erfindung gemäß Anspruch 17 bezieht sich ferner auf ein System aus einer Handwerkzeugmaschine mit einem erfindungsgemäßen Filterträger. Die Handwerkzeugmaschine kann insbesondere als Bohrmaschine, Schraubendreher, Fräse, Bohrhammer, Exzenterschleifer und vorteilhaft als ein Winkelschleifer ausgebildet sein. Die Handwerkzeugmaschine weist vorteilhaft zumindest eine Lufteingangsöffnung auf, die dazu ausgebildet ist, eine Eingang für einen Kühlluftstrom in das Innere eines Gehäuses der Handwerkzeugmaschine zu realisieren. Der Kühlluftstrom ist insbesondere dazu ausgebildet, einen Elektromotor und/oder eine Elektronik und/oder eine andere sich erwärmende innere Komponente der Handwerkzeugmaschine zu kühlen.

### Zeichnungen

Weitere Vorteile ergeben sich aus der folgenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1a: Perspektivische Ansicht eines erfindungsgemäßen Filterträgers.
Fig. 1b: Perspektivische Ansicht eines erfindungsgemäßen Filterträgers.
Fig. 1c: : Perspektivische Ansicht einer Handwerkzeugmaschine mit einem Filterträger im unbefestigten Zustand.
Fig. 1d: : Perspektivische Ansicht einer Handwerkzeugmaschine mit einem Filterträger im befestigten Zustand.
Fig. 1e: Perspektivische Ansicht des rückseitigen Endes einer Handwerkzeugmaschine mit einem Filterträger im befestigten Zustand.
Fig. 2: Perspektivische Ansicht einer alternativen Ausführungsform des erfindungsgemäßen Filterträgers.
Fig. 3: Perspektivische Ansicht einer dritten Ausführungsform eines erfindungsgemäßen Filterträgers.
Fig. 4a: Draufsicht einer vierten Ausführungsform eines Filterträgers.
Fig. 4b: Untersicht einer vierten Ausführungsform eines Filterträgers.
Fig. 4c: Perspektivische Ansicht einer Handwerkzeugmaschine mit einer vierten Ausführungsform eines Filterträgers im befestigten Zustand.
Fig. 5: Perspektivische Ansicht einer Handwerkzeugmaschine mit einer fünften Ausführungsform eines Filterträgers im befestigten Zustand.
Fig. 6: Perspektivische Ansicht einer sechsten Ausführungsform eines Filterträgers.
Fig. 7: Perspektivische Ansicht einer weiteren Ausführungsform eines Filterträgers.
Fig. 7a: Perspektivische Ansicht einer weiteren Ausführungsform des Filterträgers nach Fig. 7 im befestigten Zustand.

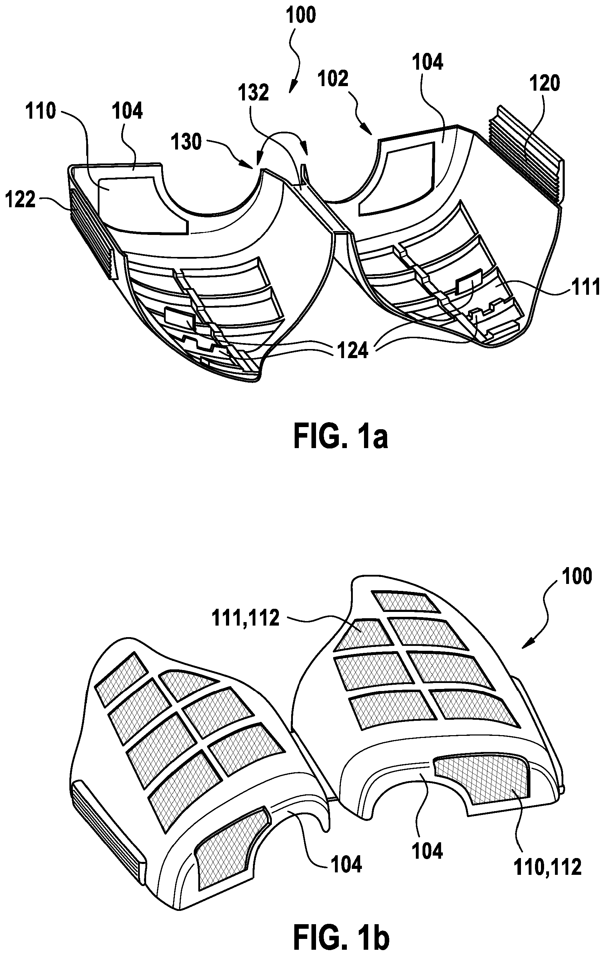

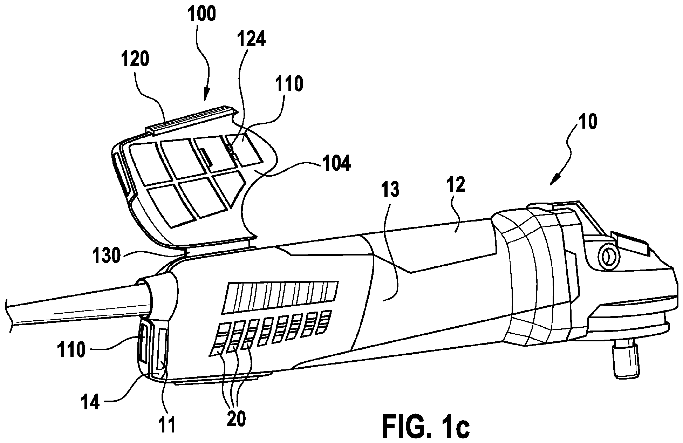

In Fig. 1a ist eine perspektivische Ansicht eines erfindungsgemäßen Filterträgers 100 im unbefestigten Zustand gezeigt. Der Filterträger 100 umfasst zumindest ein Filterträgerelement 102, hier zwei Filterträgerelemente 102, die als Filterträgergehäusehalbschalen 104 ausgebildet sind. Der Filterträger 100 ist lösbar befestigbar an einer Handwerkzeugmaschine 10 (gezeigt in Fig. 1c) ausgebildet. Der Filterträger 100 weist Aufnahmeöffnungen 110,111 auf, die dazu ausgebildet sind Filterelemente 112 (dargestellt in Fig. 1b) aufzunehmen. Der Filterträger weist beispielhaft zumindest eine Aufnahmeöffnung 111 auf, die zumindest an einer Lufteingangsöffnungen 20 an der äußeren Umfangsfläche der Handwerkzeugmaschine 10 angeordnet ist. Des Weiteren weist der Filterträger 100 beispielhaft zumindest eine Aufnahmeöffnung 110 auf, die zumindest an einer Lufteingangsöffnung 11 an dem rückseitigen Ende der Handwerkzeugmaschine 10 angeordnet ist. Die zwei Filterträgergehäusehalbschalen 104 sind hier über ein Gelenk 130 in Form eines Filmscharniers 132 beweglich miteinander verbunden. Unter beweglich verbunden soll insbesondere verstanden werden, dass das Gelenk 130 des Filterträgers 100 eine Achse darstellt, um welche sich die zwei Filterträgergehäusehalbschalen 104 des Filterträgers 100 bewegen oder drehen können. Der Öffnungswinkel zwischen den beiden Filterträgergehäusehalbschalen 104 beträgt hier 180° im unbefestigten Zustand. An zwei gegenüberliegenden Endbereichen des Filterträgers 100 sind ein erstes Befestigungselement 120 und ein zweites Befestigungselement 122 angeordnet. In dieser Ausführungsform kann der Filterträger die Umfangsfläche der Handwerkzeugmaschine im Wesentlichen vollständig in Längsrichtung umgreifen. Das erste und das zweite Befestigungselement 120,122 sind im befestigten Zustand hier im Wesentlichen entlang der Längsrichtung ausgebildet. Das erste Befestigungselement 120 des Filterträgers 122 ist hier als ein Rastelement mit Rastnasen ausgebildet. Das zweite Befestigungselement 122 des Filterträgers 100 ist hier als ein zu dem ersten Befestigungselement 120 korrespondierendes Rastelement mit einem Rastverschluss ausgebildet. Im unbefestigten Zustand des Filterträgers 100 mit der Handwerkzeugmaschine 10 ist das erste Befestigungselement 120 des Filterträgers 100 räumlich von dem zweiten Befestigungselement 122 des Filterträgers 100 beabstandet. Um von dem unbefestigten in den befestigten Zustand des Filterträgers 100 mit der Handwerkzeugmaschine zu gelangen, werden die zwei Filterträgergehäusehalbschalen 104 um das Gelenk 130 derart bewegt oder gedreht, dass ein Form- und/oder Kraftschluss zwischen dem ersten und dem zweiten Befestigungselement 120,122 des Filterträgers entstehen kann. Das erste Befestigungselement 120 des Filterträgers 100 weist beispielhaft eine Vielzahl an Rastnasen auf. Die erste Rastnase des ersten Befestigungselements 120 des Filterträgers kann beispielhaft bereits ab einem Öffnungswinkel von ca. 15° mit dem zweiten Befestigungselement 122 des Filterträgers 100 verbindbar ausgebildet sein. Der Form- und/oder Kraftschluss des ersten Befestigungselement 120 mit dem zweiten Befestigungselement 122 des Filterträgers 100 kann durch eine Verringerung des Öffnungswinkels bis 0° weiter verstärkt werden. Beträgt der Öffnungswinkel 0°, so beaufschlagen sich die beiden Endbereiche des Filterträgers 100, an denen das erste und das zweite Befestigungselement 120,122 des Filterträgers angeordnet sind. Insbesondere erfolgt die Verbindung der Befestigungselement 120,122 des Filterträgers 100 durch das Gelenk 130 selbsttätig. Der Filterträger 100 kann beispielhaft zumindest ein zusätzliches Sicherungselement 124 aufweisen, welches insbesondere im Bereich der Aufnahmeöffnungen 111 des Filterträgers 100 angeordnet sein kann. Das Sicherungselement 124 des Filterträgers 100 kann beispielhaft als eine Nase oder Erhebung ausgebildet sein, welches sich von der dem Handwerkzeug zugewandten Seitenfläche des Filterträgers 100 in Richtung der Handwerkzeugmaschine 10 erstreckt. Das Sicherungselement 124 der Filterträgers 100 ist zur zusätzlichen Axial- und/oder Rotationssicherung des Filterträgers 100 im befestigten Zustand an der Handwerkzeugmaschine 10 vorgesehen. Das Sicherungselement 124 des Filterträgers 100 kann form- und/oder kraftschlüssig lösbar verbindbar mit den Lufteingangsöffnungen 20 an der äußeren Umfangsfläche des Gehäuses 12 der Handwerkzeugmaschine 10 ausgebildet sein. Insbesondere kann der Sicherungselement 124 des Filterträgers eine Lufteingangsöffnung 20 des Handwerkzeugs 10 im befestigten Zustand im Wesentlichen vollständig ausfüllen. Weiterhin kann das Sicherungselement 124 des Filterträger 100 im befestigten Zustand derart angeordnet sein, dass zumindest eine Seitenkante einer Lufteingangsöffnung 20 der Handwerkzeugmaschine 10 kraft- und/oder formschlüssig beaufschlagt wird, insbesondere 3 Seitenkanten.

In Fig. 1b ist eine perspektivische Ansicht des Filterträgers 100 gezeigt, wobei in den Aufnahmeöffnungen 110,111 zumindest ein Filterelement 112 angeordnet ist.

In Fig. 1c ist eine perspektivische Ansicht einer Handwerkzeugmaschine 10, insbesondere eines Winkelschleifers, mit einem Filterträger 100 im unbefestigten Zustand gezeigt. Die Handwerkzeugmaschine weist ein Gehäuse 12 mit einer äußeren Umfangsfläche 13 auf. An der äußeren Umfangsfläche 13 der Handwerkzeugmaschine 10 sind Lufteingangsöffnungen 20 angeordnet, die als ein Zugang für einen Kühlluftstrom in das Innere des Gehäuses 12 der Handwerkzeugmaschine 10 ausgebildet sind. Weitere Lufteingangsöffnungen 11 können beispielhaft am rückseitigen Ende 14 der Handwerkzeugmaschine 10 angeordnet sein.

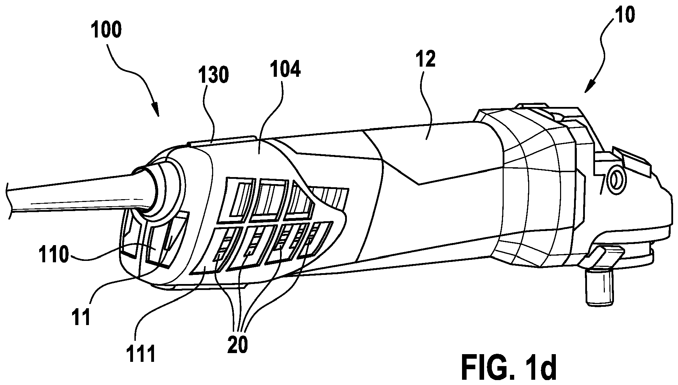

In Fig. 1d ist eine perspektivische Ansicht einer Handwerkzeugmaschine 10, insbesondere eines Winkelschleifers, mit einem Filterträger 100 im befestigten Zustand gezeigt. Beispielhaft kann der Filterträger 100 die Handwerkzeugmaschine 10 im befestigten Zustand konturnah umschließen.

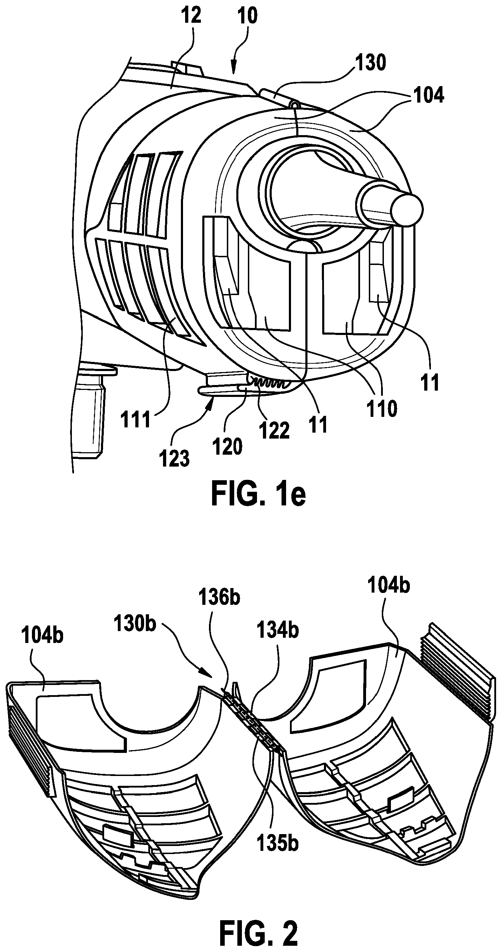

In Fig. 1e ist eine perspektivische Ansicht des rückseitigen Endes einer Handwerkzeugmaschine 10 mit einem Filterträger 100 im befestigten Zustand gezeigt. Im befestigten Zustand ist das Filmscharnier 132 des Filterträgers 100 beispielhaft elastisch derart gespannt, dass das Filmscharnier 132 eine Bogenform aufweist. Des Weiteren weist das erste Befestigungselement 120 des Filterträgers 100 ein Betätigungselement 123 in Form eines hervorstehenden Vorsprungs auf. Eine Betätigung des Betätigungselements 123 des Filterträgers 100 kann beispielhaft zum Lösen des Form- und/oder Kraftschlusses zwischen dem ersten Befestigungselement 120 und dem zweiten Befestigungselement 122 des Filterträgers 100 ausgebildet sein. Vorteilhaft lässt sich der Filterträger 100 über eine Betätigung des Betätigungselement 123 einfach von der Handwerkzeugmaschine 10 lösen.

Alternativ ist auch denkbar, das Gelenk 130b durch ein zweites erstes Befestigungselement 120 und ein zweites zweites Befestigungselement 220 des Filterträgers zu ersetzen. Dadurch sind die beiden Gehäusehalbschalen 104 im unbefestigten Zustand voneinander beabstandet, was vorteilhaft ein erleichtertes Aufbringen des Filterträgers 100 an die Handwerkzeugmaschine 10 zur Folge hat.

In Fig. 2 ist eine perspektivische Ansicht einer alternativen Ausführungsform des erfindungsgemäßen Filterträgers 100 gezeigt. Im Wesentlichen unterscheidet sich diese alternative Ausführungsform des Filterträgers 100 durch das Gelenk 130b. Das Gelenk 130b ist hier als ein Drehgelenk ausgebildet. Das Filterträgerelement 102 ist hier zweistückig aus zwei Gehäusehalbschalen 104b ausgebildet. Die Gehäusehalbschalen 104b des Filterträgers 100 weisen an den zu verbindenden Endbereichen Formschlusselemente 134b,136b auf. Die Formschlusselemente 134b,136b der Gehäusehalbschalen 104b sind dazu ausgebildet einen Stift 135b formschlüssig aufzunehmen. Im miteinander verbundenen Zustand sind die beiden Gehäusehalbschalen 104b drehbar um den Stift 135b gelagert.

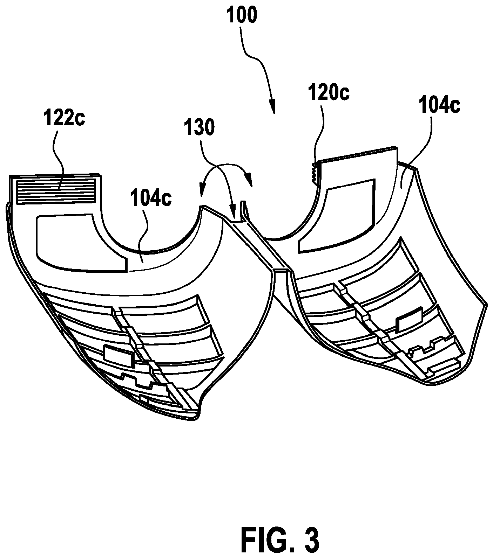

In Fig. 3 eine perspektivische Ansicht einer dritten Ausführungsform eines erfindungsgemäßen Filterträgers 100 gezeigt. In dieser Ausführungsform umgreifen die Filterträgergehäusehalbschalen 104c die äußere Umfangsfläche 13 der Handwerkzeugmaschine 10 in Längsrichtung nur teilweise. In dieser Ausführungsform sind das erste und das zweite Befestigungselement 120c,122c des Filterträgers 100 quer zu der Längsausrichtung des Filterträgers 100 angeordnet, insbesondere an dem Filterträgerelement 102, welches dem rückseitigen Ende der Handwerkzeugmaschine 10 zugeordnet ist.

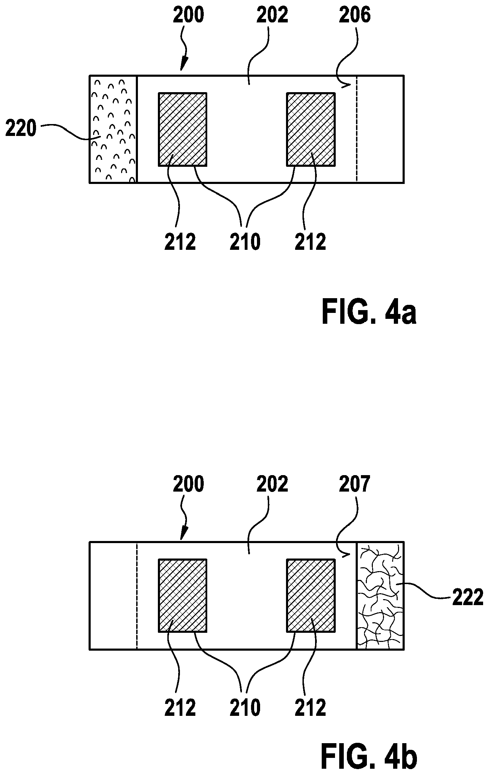

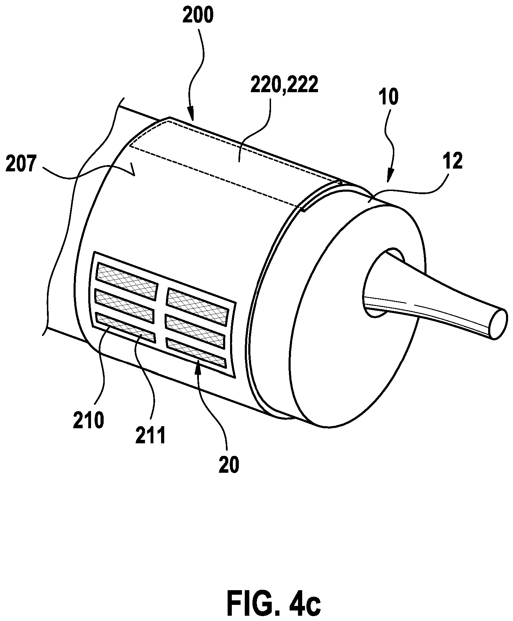

In Fig. 4a ist eine Draufsicht einer vierten Ausführungsform eines Filterträgers 200, in Fig. 4b eine Untersicht einer vierten Ausführungsform des Filterträgers 200 und in Fig. 4c eine perspektivische Ansicht einer Handwerkzeugmaschine 10 mit einer vierten Ausführungsform des Filterträgers 200 im befestigten Zustand gezeigt. Das Filterträgerelement 202 des Filterträgers 200 kann vorteilhaft aus einem weich elastischen Material, beispielsweise einem Gewebe, einem Stoff oder einem elastische Kunststoff wie TPE ausgebildet sein. Der Filterträger 200 weist Aufnahmeöffnung 210 auf, die dazu ausgebildet sind, Filterelemente 212 aufzunehmen. Der Filterträger 200 weist ein erstes Befestigungselement 220 und ein zweites Befestigungselement 222 auf, die miteinander lösbar verbindbar ausgebildet sind. Die Verbindung der beiden Befestigungselemente 220,222 des Filterträgers 200 miteinander kann beispielhaft über eine Klettverbindung erfolgen. Hierfür ist das erste Befestigungselement 220 des Filterträgers als ein Klettelement, insbesondere ein Hakenelement, und das zweite Befestigungselement des Filterträgers 200 als ein korrespondierendes Klettelement, insbesondere ein Schlaufenelement, ausgebildet. Das erste und das zweite Befestigungselement 220,222 des Filterträgers 200 können vorteilhaft in der Nähe von gegenüberliegenden Endbereichen, insbesondere Seitenkanten und auf gegenüberliegenden Seitenflächen des Filterträgers angeordnet. Insbesondere ist das erste Befestigungselement 220 des Filterträgers 200 an der inneren Seitenfläche 106 angeordnet, wobei die innere Seitenfläche 206 die Handwerkzeugmaschine im befestigten Zustand beaufschlagt. Das zweite Befestigungselement 222 des Filterträgers 200 kann vorteilhaft an der äußeren Seitenfläche 207 des Filterträgers 200 angeordnet sein. Der Filterträger 200 ist insbesondere derart elastische ausgebildet, dass er im unbefestigten Zustand im Wesentlichen eben und stapelbar ausgebildet ist (siehe Fig. 4a) und im befestigten Zustand eine Umfangsfläche einer Handwerkzeugmaschine 10 umgreifend ausgebildet ist (siehe Fig. 4c). Insbesondere kann der Filterträger 200 bandförmig oder als Hülle ausgebildet sein.

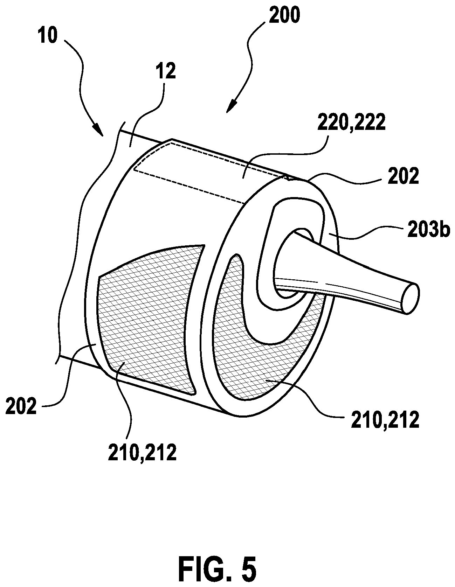

In Fig. 5 ist eine perspektivische Ansicht einer Handwerkzeugmaschine 10 mit einer fünften Ausführungsform eines Filterträgers 200 im befestigten Zustand gezeigt. Im Wesentlichen unterscheidet sich diese Ausführungsform von der vorherigen Ausführungsform des Filterträgers 200 durch ein zusätzliches Filterträgerelement 203b, das im befestigten Zustand vorteilhaft an dem rückseitigen Ende der Handwerkzeugmaschine 10 angeordnet ist. Das zusätzliche Filterträgerelement 203b ist mit dem Filterträgerelement 202 verbindbar ausgebildet. Des Weiteren umfasst das zusätzliche Filterträgerelement 203b Aufnahmeöffnungen 211 für Filterelemente 212, die dazu ausgebildet sind, Lufteingangsöffnungen am rückseitigen Ende der Handwerkzeugmaschine 10 abzudecken. Insbesondere kann der Filterträger 200 auch als Schale ausgebildet sein.

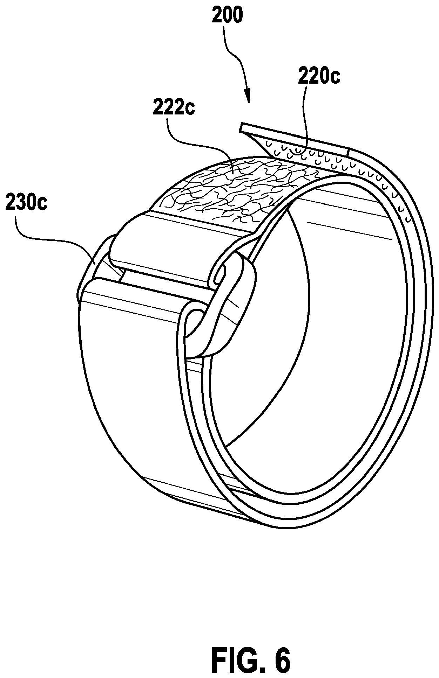

Fig. 6: Perspektivische Ansicht einer sechsten Ausführungsform eines Filterträgers 200. Beispielhaft ist an dem Endbereich des Filterträgers 200, an dem das zweite Befestigungselement 222 des Filterträgers 200 angeordnet ist, ein ringartiges Befestigungselement 230c, insbesondere ein Schnallenelement, angeordnet. Der gegenüberliegende Endbereich des Filterträgers 200c, an dem das erste Befestigungselement 220c des Filterträgers 200c angeordnet ist, kann durch das ringartige Befestigungselement 230c durchgefädelt werden. Insbesondere ist in dieser Ausführungsform das erste Befestigungselement 220c des Filterträgers 200 auf derselben Seitenfläche wie das zweite Befestigungselement 222c des Filterträgers angeordnet.

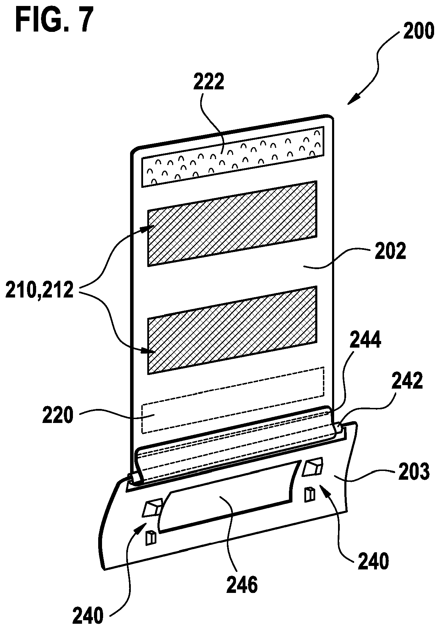

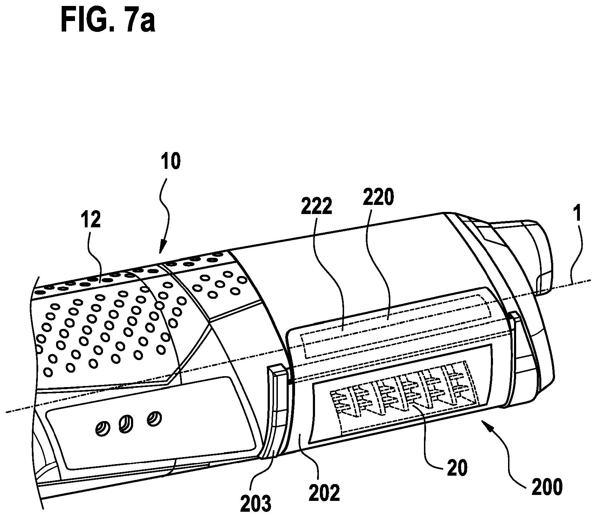

In Fig. 7 ist eine perspektivische Ansicht einer weiteren Ausführungsform eines Filterträgers 200, in Fig. 7a im an der Handwerkzeugmaschine 10 befestigten Zustand, gezeigt. Der Filterträger 200 umfasst ein weich elastisches Filterträgerelement 202, welches im Wesentlichen wie das Filterträgerelement im Ausführungsbeispiel nach Fig. 4a und Fig. 4b ausgebildet ist. Zur zusätzlichen Sicherung des Filterträgers 200 an der Handwerkzeugmaschine 10 weist der Filterträger 200 ein zweites Filterträgerelement 203 auf, an dem zusätzliche Formschlusselemente 240 angeordnet sind. Das zweite Filterträgerelement 203 ist beispielhaft aus einem formstabilen Material wie einem hart elastischen Kunststoff ausgebildet. Das zweite Filterträgerelement 203 ist mit dem Filterträgerelement 202 über einen Steg 242, der beispielsweise an dem zweiten Filterträgerelement 203 ausgebildet ist, verbunden. Ein stirnseitiges Ende des ersten Filterträgerelements 202 umschlingt den Steg 242 des zweiten Filterträgerelements 203 und kann beispielsweise durch Vernähen permanent an dem zweiten Filterträgerelement 203 insbesondere drehbar befestigt werden. Die Naht 244 ist in Fig. 7 durch gestrichelte Linien angedeutet.

Das zweite Filterträgerelement 203 weist an einer im befestigten Zustand der Handwerkzeugmaschine 10 zugewandten Seite vier zusätzliche Formschlusselemente 240 auf, die insbesondere einstückig mit dem zweiten Filterträgerelement 203 ausgebildet sind. Die zusätzlichen Formschlusselemente 240 können beispielsweise als Nasen oder Stege ausgebildet sein. Die zusätzlichen Formschlusselemente 240 greifen in am Gehäuse 12 der Handwerkzeugmaschine 10 angeordnete korrespondierende Sicherungselemente (nicht dargestellt) in Form von Taschen oder Aussparungen derart ein, dass das zweite Filterträgerelement 203 gegen ein Verdrehen oder axiales Verschieben gesichert ist. Alternativ ist auch denkbar, dass die zusätzlichen Formschlusselemente 240 in Lufteingangsöffnungen 20 der Handwerkzeugmaschine 10 eingreifen und dadurch befestigbar sind (nicht dargestellt). Ebenfalls ist denkbar, dass das Gehäuse 12 der Handwerkzeugmaschine 10 Sicherungselemente in Form von Nasen oder Stege aufweist und das zweite Filterträgerelement 203 des Filterträgers 200 entsprechende Taschen zur Aufnahme aufweist.

Unter einem axialen Verschieben soll insbesondere eine Verschiebung des Filterträgers 200 entlang der Längsachse 1 der Handwerkzeugmaschine 10 verstanden werden. Zur Befestigung des Filterträgers 200 an der Handwerkzeugmaschine 10 wird zunächst das zweite Filterträgerelement 203 mit der Handwerkzeugmaschine 10 verbunden, insbesondere durch Aufsetzen, und anschließend wird das Filterträgerelement 202 um das Gehäuse 12 der Handwerkzeugmaschine 10 geschlungen und über die Befestigungselemente 220,222, insbesondere die Klettverschlusselemente, verschlossen. Vorteilhaft wird der Filterträger 200 durch das zweite Filterträgerelement 203 sicher an einer vorgesehenen Position befestigt.

Ist das zweite Filterträgerelement 203 im befestigten Zustand über Lufteingangsöffnungen 20 der Handwerkzeugmaschine 10 angeordnet, so weist das zweite Filterträgerelement 203 vorteilhaft zumindest eine Ausnehmung 246 mit zumindest der Größe der Lufteingangsöffnungen 20 auf. Besonders vorteilhaft ist das Filterelement 212 des ersten Filterträgerelements 202 im befestigten Zustand derart über der Ausnehmung 246 des zweiten Filterträgerelements 203 angeordnet, dass ein Luftstrom, der über die Eingangsöffnungen 20 in das Gehäuse 12 der Handwerkzeugmaschine 10 eintritt, in Strömungsrichtung zuerst das Filterelement 212 und dann die Ausnehmung 246 passiert.

## Patentansprüche

1. Filterträger (100;200) für ein Handwerkzeugmaschine (10) aufweisend zumindest ein Filterträgerelement (102;202), wobei das Filterträgerelement (102;202) zumindest eine Aufnahmeöffnung (111;210) aufweist, die dazu ausgebildet ist, zumindest ein Filterelement (112;212) aufzunehmen, zumindest ein erstes Befestigungselement (120;220) und zumindest ein zweites Befestigungselement (122;222) zur lösbaren formschlüssigen und/oder kraftschlüssigen Befestigung des Filterträgers (100;200) an eine Handwerkzeugmaschine (10), wobei das erste Befestigungselement (120;220) und das zweite Befestigungselement (122;222) des Filterträgers (100;200) derart an gegenüberliegenden Endbereichen des Filterträgers (100;200) angeordnet sind, dass das erste Befestigungselement (120;220) verbindbar mit dem zweiten Befestigungselement (122;222) ist, **dadurch gekennzeichnet, dass** der Filterträger (100) zumindest ein Sicherungselement (124) aufweist, welches insbesondere im Bereich der Aufnahmeöffnungen (111) des Filterträgers (100) angeordnet ist, wobei das Sicherungselement (124) zur Axial- und/oder Drehsicherung des Filterträgers (100) im befestigten Zustand an der Handwerkzeugmaschine (10) vorgesehen ist.

2. Filterträger nach Anspruch 1, **dadurch gekennzeichnet, dass** der Filterträger (100;200) dazu ausgebildet ist, im befestigten Zustand zumindest teilweise die Umfangsfläche einer Handwerkzeugmaschine (10) in Längsrichtung, und zumindest teilweise, insbesondere vollständig, die Umfangsfläche der Handwerkzeugmaschine (10) in Umfangsrichtung zu umschließen.

3. Filterträger nach einem der vorherigen Ansprüche, **dadurch gekennzeichnet, dass** das erste Befestigungselement (120;220) und das zweite Befestigungselement (122;222) im Wesentlichen entlang oder quer zu der Längsrichtung des Filterträgers (100;200) angeordnet ist.

4. Filterträger nach einem der vorherigen Ansprüche, **dadurch gekennzeichnet, dass** der Filterträger (100;200) ein weiteres Filterträgerelement (102;202) aufweist, das in einem Winkel von 45°-90° zu der Längsausrichtung der Handwerkzeugmaschine (10) angeordnet ist.

5. Filterträger nach einem der vorherigen Ansprüche, **dadurch gekennzeichnet, dass** das Filterträgerelement (100;200) aus einem hart elastischen Material ausgebildet ist.

6. Filterträger nach einem der vorherigen Ansprüche, **dadurch gekennzeichnet, dass** der Filterträger (100) zwei Filterträgerelemente (102), ausgebildet als Filterträgerhalbschalen (104), umfasst.

7. Filterträger nach Anspruch 6, **dadurch gekennzeichnet, dass** die zwei Filterträgerhalbschalen (104) über zwei erste Befestigungselemente (120;220) und zwei zweite Befestigungselemente (122;222) lösbar miteinander verbindbar sind.

8. Filterträger nach Anspruch 6, **dadurch gekennzeichnet, dass** ein Gelenk (130), insbesondere ein Scharniergelenk (132) oder ein Drehgelenk (130b), zwischen den zwei Filterträgerhalbschalen (104) angeordnet ist.

9. Filterträger nach einem der vorherigen Ansprüche, **dadurch gekennzeichnet, dass** das erste Befestigungselement (120) und das zweite Befestigungselement (122) als zueinander korrespondierende Rastelemente ausgebildet sind.

10. Filterträger nach einem der vorherigen Ansprüche, **dadurch gekennzeichnet, dass** das Filterträgerelement (202) aus einem weich elastischen Material ausgebildet ist.

11. Filterträger nach Anspruch 10, **dadurch gekennzeichnet, dass** das erste Befestigungselement (220) und das zweite Befestigungselement (222) auf gegenüberliegenden Seitenflächen des Filterträgers (200) angeordnet sind.

12. Filterträger nach einem der Ansprüche 10 bis 11, **dadurch gekennzeichnet, dass** das erste Befestigungselement (220) und das zweite Befestigungselement (222) zueinander korrespondierende Klettverschlusselemente aufweisen.

13. Filterträger nach einem der Ansprüche 10 bis 12, **dadurch gekennzeichnet, dass** eine Seitenfläche des Filterträgerelements (200) als das erste Befestigungselement (220) ausgebildet ist, und die zweite Seitenfläche des Filterträgerelements (200) als das zweite Befestigungselement (222) ausgebildet ist.

14. Filterträger nach einem der Ansprüche 10 bis 13, **dadurch gekennzeichnet, dass** der Filterträger (200) zumindest ein zusätzliches Formschlusselement (240) aufweist, das dazu ausgebildet ist, eine axiale Verschiebung des Filterträgers (200) entlang der Längsachse (1) der Handwerkzeugmaschine (10) und/oder ein Verdrehen des Filterträgers (200) um die Längsachse (1) der Handwerkzeugmaschine (10) zu verhindern.

15. Filterträger nach einem der Ansprüche 10 bis 14, **dadurch gekennzeichnet, dass** der Filterträger (200) ein zweites Filterträgerelement (203) aufweist, wobei das zumindest eine Formschlusselement (240) an dem zweiten Filterträgerelement (203) angeordnet ist.

16. Filterträger nach einem der Ansprüche 10 bis 15, **dadurch gekennzeichnet, dass** das zweite Filterträgerelement (203) mit dem ersten Filterträgerelement (202) über einen Steg (203) verbunden ist.

17. System aus einer Handwerkzeugmaschine (10) mit einem Filterträger (100;200) nach einem der vorhergehenden Ansprüche.

## Claims

1. Filter carrier (100; 200) for a hand-held power tool (10), having at least one filter carrier element (102; 202), wherein the filter carrier element (102; 202) has at least one receiving opening (111; 210) that is designed to receive at least one filter element (112; 212), at least one first fastening element (120; 220) and at least one second fastening element (122; 222) for releasably fastening the filter carrier (100; 200) to a hand-held power tool (10) by way of a force-fit and/or a form-fit, wherein the first fastening element (120; 220) and the second fastening element (122; 222) of the filter carrier (100; 200) are arranged in opposite end regions of the filter carrier (100; 200) such that the first fastening element (120; 220) is connectable to the second fastening element (122; 222), **characterized in that** the filter carrier (100) has at least one securing element (124) which is arranged in particular in the region of the receiving openings (111) of the filter carrier (100), wherein the securing element (124) is intended for axial and/or rotational securing of the filter carrier (100) in the fastened state thereof on the hand-held power tool (10).

2. Filter carrier according to Claim 1, **characterized in that** the filter carrier (100; 200) is designed, in the fastened state, to at least partially enclose the circumferential surface of a hand-held power tool (10) in the longitudinal direction, and to at least partially, in particular completely, enclose the circumferential surface of the hand-held power tool (10) in the circumferential direction.

3. Filter carrier according to either of the preceding claims, **characterized in that** the first fastening element (120; 220) and the second fastening element (122; 222) are arranged substantially along or transversely to the longitudinal direction of the filter carrier (100; 200).

4. Filter carrier according to one of the preceding claims, **characterized in that** the filter carrier (100; 200) has a further filter carrier element (102; 202), which is arranged at an angle of 45°-90° to the longitudinal orientation of the hand-held power tool (10).

5. Filter carrier according to one of the preceding claims, **characterized in that** the filter carrier element (100; 200) is made of a hard-elastic material.

6. Filter carrier according to one of the preceding claims, **characterized in that** the filter carrier (100) comprises two filter carrier elements (102) in the form filter-carrier half-shells (104).

7. Filter carrier according to Claim 6, **characterized in that** the two filter-carrier half-shells (104) are releasably connectable together via two first fastening elements (120; 220) and two second fastening elements (122; 222).

8. Filter carrier according to Claim 6, **characterized in that** a joint (130), in particular a hinge joint (132) or a rotary joint (130b), is arranged between the two filter-carrier half-shells (104).

9. Filter carrier according to one of the preceding claims, **characterized in that** the first fastening element (120) and the second fastening element (122) are in the form of mutually corresponding latching elements.

10. Filter carrier according to one of the preceding claims, **characterized in that** the filter carrier element (202) is made of a soft-elastic material.

11. Filter carrier according to Claim 10, **characterized in that** the first fastening element (220) and the second fastening element (222) are arranged on opposite lateral surfaces of the filter carrier (200) .

12. Filter carrier according to either of Claims 10 and 11, **characterized in that** the first fastening element (220) and the second fastening element (222) have mutually corresponding hook-and-loop fastener elements.

13. Filter carrier according to one of Claims 10 to 12, **characterized in that** a lateral surface of the filter carrier element (200) is in the form of the first fastening element (220), and the second lateral surface of the filter carrier element (200) is in the form of the second fastening element (222) .

14. Filter carrier according to one of Claims 10 to 13, **characterized in that** the filter carrier (200) has at least one additional form-fitting element (240), which is intended to prevent axial displacement of the filter carrier (200) along the longitudinal axis (1) of the hand-held power tool (10) and/or twisting of the filter carrier (200) about the longitudinal axis (1) of the hand-held power tool (10).

15. Filter carrier according to one of Claims 10 to 14, **characterized in that** the filter carrier (200) has a second filter carrier element (203), wherein the at least one additional form-fitting element (240) is arranged on the second filter carrier element (203) .

16. Filter carrier according to one of Claims 10 to 15, **characterized in that** the second filter carrier element (203) is connected to the first filter carrier element (202) via a rib (203).

17. System made up of a hand-held power tool (10) having a filter carrier (100; 200) according to one of the preceding claims.

## Revendications

1. Support de filtre (100 ; 200) pour une machine-outil manuelle (10) comprenant au moins un élément de support de filtre (102 ; 202), l'élément de support de filtre (102 ; 202) présentant au moins une ouverture de réception (111 ; 210) qui est configurée pour recevoir au moins un élément de filtre (112 ; 212), au moins un premier élément de fixation (120 ; 220) et au moins un deuxième élément de fixation (122, 222) pour la fixation amovible par complémentarité de forme et/ou par adhérence du support de filtre (100 ; 200) à une machine-outil manuelle (10), le premier élément de fixation (120 ; 220) et le deuxième élément de fixation (122, 222) du support de filtre (100 ; 200) étant agencés sur des zones d'extrémité opposées du support de filtre (100 ; 200) de telle sorte que le premier élément de fixation (120 ; 220) peut être relié au deuxième élément de fixation (122 ; 222), **caractérisé en ce que** le support de filtre (100) présente au moins un élément d'immobilisation (124) qui est notamment agencé dans la zone des ouvertures de réception (111) du support de filtre (100), l'élément d'immobilisation (124) étant prévu pour l'immobilisation axiale et/ou en rotation du support de filtre (100) à l'état fixé sur la machine-outil manuelle (10).

2. Support de filtre selon la revendication 1, **caractérisé en ce que** le support de filtre (100 ; 200) est configuré pour entourer, à l'état fixé, au moins partiellement la surface périphérique d'une machine-outil manuelle (10) dans la direction longitudinale, et au moins partiellement, notamment entièrement, la surface périphérique de la machine-outil manuelle (10) la direction périphérique.

3. Support de filtre selon l'une quelconque des revendications précédentes, **caractérisé en ce que** le premier élément de fixation (120 ; 220) et le deuxième élément de fixation (122 ; 222) sont agencés essentiellement le long de ou transversalement à la direction longitudinale du support de filtre (100 ; 200).

4. Support de filtre selon l'une quelconque des revendications précédentes, **caractérisé en ce que** le support de filtre (100 ; 200) présente un autre élément de support de filtre (102 ; 202), qui est agencé à un angle de 45° à 90° par rapport à l'orientation longitudinale de la machine-outil manuelle (10).

5. Support de filtre selon l'une quelconque des revendications précédentes, **caractérisé en ce que** l'élément de support de filtre (100 ; 200) est réalisé en un matériau élastique dur.

6. Support de filtre selon l'une quelconque des revendications précédentes, **caractérisé en ce que** le support de filtre (100) comprend deux éléments de support de filtre (102), configurés sous forme de demi-coques de support de filtre (104).

7. Support de filtre selon la revendication 6, **caractérisé en ce que** les deux demi-coques de support de filtre (104) peuvent être reliées de manière amovible l'une à l'autre par le biais de deux premiers éléments de fixation (120 ; 220) et de deux deuxièmes éléments de fixation (122 ; 222).

8. Support de filtre selon la revendication 6, **caractérisé en ce qu'**une articulation (130), notamment une articulation à charnière (132) ou une articulation tournante (130b), est agencée entre les deux demi-coques de support de filtre (104).

9. Support de filtre selon l'une quelconque des revendications précédentes, **caractérisé en ce que** le premier élément de fixation (120) et le deuxième élément de fixation (122) sont configurés sous forme d'éléments d'encliquetage qui se correspondent.

10. Support de filtre selon l'une quelconque des revendications précédentes, **caractérisé en ce que** l'élément de support de filtre (202) est réalisé en un matériau élastique souple.

11. Support de filtre selon la revendication 10, **caractérisé en ce que** le premier élément de fixation (220) et le deuxième élément de fixation (222) sont agencés sur des surfaces latérales opposées du support de filtre (200).

12. Support de filtre selon l'une quelconque des revendications 10 à 11, **caractérisé en ce que** le premier élément de fixation (220) et le deuxième élément de fixation (222) présentent des éléments de fermeture agrippante qui se correspondent.

13. Support de filtre selon l'une quelconque des revendications 10 à 12, **caractérisé en ce qu'**une surface latérale de l'élément de support de filtre (200) est configurée en tant que premier élément de fixation (220), et la deuxième surface latérale de l'élément de support de filtre (200) est configurée en tant que deuxième élément de fixation (222).

14. Support de filtre selon l'une quelconque des revendications 10 à 13, **caractérisé en ce que** le support de filtre (200) présente au moins un élément à complémentarité de forme supplémentaire (240) qui est configuré pour empêcher un déplacement axial du support de filtre (200) le long de l'axe longitudinal (1) de la machine-outil manuelle (10) et/ou une rotation du support de filtre (200) autour de l'axe longitudinal (1) de la machine-outil manuelle (10).

15. Support de filtre selon l'une quelconque des revendications 10 à 14, **caractérisé en ce que** le support de filtre (200) présente un deuxième élément de support de filtre (203), l'au moins un élément à complémentarité de forme (240) étant agencé sur le deuxième élément de support de filtre (203).

16. Support de filtre selon l'une quelconque des revendications 10 à 15, **caractérisé en ce que** le deuxième élément de support de filtre (203) est relié au premier élément de support de filtre (202) par le biais d'une entretoise (203).

17. Système composé d'une machine-outil manuelle (10) comprenant un support de filtre (100 ; 200) selon l'une quelconque des revendications précédentes.
